Europäisches Patentamt

European Patent Office

Office européen des brevets

(11) Publication number: **0 331 842**
A1

# EUROPEAN PATENT APPLICATION

(21) Application number: 88311053.8

(22) Date of filing: 23.11.88

(51) Int. Cl.⁴: **E21B 21/06**

(30) Priority: 07.03.88 US 165179

(43) Date of publication of application:
13.09.89 Bulletin 89/37

(84) Designated Contracting States:
AT BE CH DE ES FR GB GR IT LI LU NL SE

(71) Applicant: Desormeaux, Thomas
102 Manassa Drive
Carenco, L.A.(US)

(72) Inventor: Desormeaux, Thomas
102 Manassa Drive
Carenco, L.A.(US)

(74) Representative: Godsill, John Kenneth et al
Haseltine Lake & Co. Hazlitt House 28
Southampton Buildings Chancery Lane
London WC2A 1AT(GB)

(54) Process and apparatus for recovery of oil.

(57) A system wherein contaminated cuttings are fed into a three tiered system (20) wherein the cuttings are initially incinerated so that any fluid such as oil are evaporated out of the cuttings and are extracted through exhaust systems (62, 70). Cuttings then move to a second auger system (36) where the cuttings are then heated to a temperature sufficient to incinerate them to an ashen state to further break them down to smaller particles, and next the cuttings are moved to a third auger system (44) wherein the cuttings are moved through a auger and ambient temperature so that the cuttings are cooled down to be recovered into bags or simply dumped into the surrounding water of an offshore rig. The gaseous oil that was exhausted out of the initial recovery phase is then delivered into a condenser unit where the oil will condense through a heat exchange relationship to be collected in a tank beneath the condenser, so that the lighter than water oil will form an upper layer with the heavier water on the bottom of the collector tank. To prevent ignition of the gaseous oil in the incineration chambers a relatively inert gas is introduced through line 100.

FIG.1

## PROCESS AND APPARATUS FOR RECOVERY OF OIL

The present invention relates to a process and apparatus for the recovery of oil and more particularly to the recovery of oil from oil well cuttings.

In the field of the oil well drilling, during the process of drilling in the well, drilling fluids are utilized for several purposes, one of which is to be pumped downhole for flushing away cuttings as the drill bit cuts through the strata of the earth. The cuttings are removed upwardly along the annular space between the drill string and the borehole, so as to be brought above ground.

In order to reuse relatively uncontaminated drilling fluid, the drilling fluid and cuttings brought up from the borehole are processed through a series of shale shakers and the like wherein the drilling fluid and cuttings are shifted so that the drilling fluid is allowed to flow back for reuse in the borehole, and the cuttings then are removed, often to a waste pit or the like. At present, there are pending U.S. regulations which will require that the offshore waste pits be disallowed. Therefore there is an ever impending need for a means for disposal of cuttings which are usually highly contaminated with hydrocarbons or other fluids.

There are known in the art several apparatus , one of which has a conveyor system for moving the cuttings through a chamber wherein the cuttings are "fired" by flames, in order to dry them to an ashen state, and thus removed as dry cuttings. The shortcoming in this particular apparatus is that an open flame near the site of a borehole is extremely dangerous and is now disallowed under present U.S. federal and state regulations. In addition, U.S. Patent No. 4,606,283, entitled "System for Extracting Contaminants And Hydrocarbons From Cuttings Waste In Oil Well Drilling", relates to the incineration of oil well cuttings through the use of laterally disposed augers where the cuttings are incinerated, and U.S. Patent Application Serial Number 946,953, which is presently pending, also relates to an improvement of the process in U.S. Patent No. 4,606,283, U.S. Patent No. 4,606,283, also relates to improvements in the incineration process as disclosed in U.S. Patent Serial No. 840,067, and further relates to the recover of oil following the incineration process.

An additional conventional method available is the cuttings washer system which is an expensive system to utilize, ranging from $ 300.00 to $ 600.00 per day plus the additional cost of an emulsifier or soap to supply the cuttings washer with dispersing capabilities. Because of the recent restrictions, it becomes necessary to collect the cuttings in 25 to 50 gallon (94.6litres to 189.2litres) barrel tanks which must be transported to a dock site and further transported to a waste disposal site. The cost for disposal of this waste ranges from $ 8.00 to $ 20.00 a barrel. Thus the total costs of the washer system would range to a total of $ 2,500.00 per day cost.

It is also of significant important that in the treatment of the cuttings from the borehole, in view of the fact that often cuttings are ladened with oil, it would be beneficial to extract the oil from the cuttings and to recover the oil which is of course a valuable commodity.

Further, one of the problems that has been confronted in the present state of the art is, during the incineration of the cuttings through the incineration chambers, there is a great possibility of ignition of the gas and oil fumes during incineration, which may lead to inadvertent explosion within the chambers which is a danger to the workmen on the rig, and the surrounding environment. It is important that this probability of inadvertent ignition be solved.

According to one aspect of the present invention there is provided an oil recovery system, comprising:

a) at least one chamber for receiving oil well cuttings and heating the cuttings to a temperature so as to cause vaporization of hydrocarbons contained on the cuttings; and

b) exhaust means for receiving the vaporized hydrocarbons from the chamber and moving the hydrocarbons to a recover zone; characterised by

c) means for introducing a fluid into the chamber of such a quantity and relative inertness as to hinder inadvertent ignition of the vapors during vaporization of the hydrocarbons.

According to a second aspect of the invention there is provided a method for hindering ignition of hydrocarbons that are removed from oil well cuttings through heating, the method comprising: a) providing a vaporisation zone for receiving oil well cuttings containing hydrocarbons therein;

b) transferring the cuttings containing hydrocarbons into the vaporization zone;

c) vaporizing the hydrocarbons from the cuttings;

d) introducing an inert gas into the vaporization zone to preclude ignition of the vapors; and

e) routing the vaporized ignited hydrocarbons into a collection zone.

According to further aspects of the invention attention is drawn, by way of example, to claims 11 and 12.

One embodiment of the present invention is a system primarily for the extraction and recovery of oil from borehole cuttings that have been recovered from a downhole. In that system, contaminated cuttings are fed into a multi-tiered incineration chamber system wherein the cuttings are incinerated, oil is evaporated from the cuttings, and extracted through exhaust systems, and the oil is then recovered through condensation of the oil and separation from any water. The system further includes the introduction of an inert fluid, such as nitrogen gas, into each incineration chamber during the incineration process, enabling the incineration of the cuttings within the chamber as the cuttings are moved through each chamber, yet preventing inadvertent ignition of any oil or gas fumes or the like which would normally ignite under the high temperature, but due to the presence of the inert gas in the chamber, ignition is prevented. Further, there in included introduction of nitrogen gas into the exhaust line to further insure that no ignition of gases being exhausted takes place in the system, so that ignition would not occur inadvertently following the flow of the fumes out of the chamber into the exhaust system.

For a better understanding the invention, and to show how the same may be carried into effect, reference will now be made, by way of example to the accompanying drawings.

FIGURE 1 is an overall side view of the preferred embodiment of the apparatus of the present invention; and

FIGURE 2 is an end view of the apparatus of Figure 1.

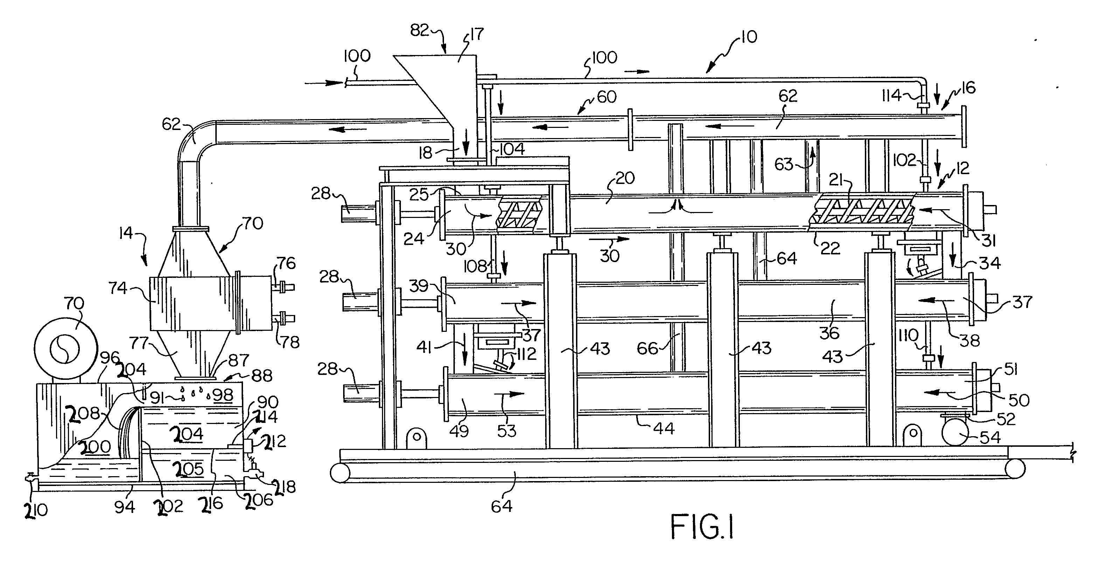

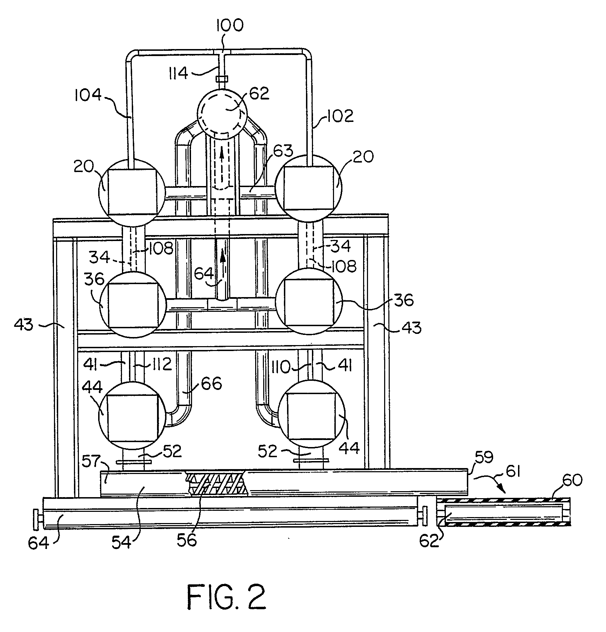

Prior to a discussion of the preferred embodiment of the system as illustrated in FIGURES 1 and 2, it should be noted that U.S. Patent No. 4,606,283 is directed toward related technology and is incorporated herein by reference. Further, U.S. Patent Applications bearing Serial Number 840,067 and 946,953 respectively, presently pending, also are directed toward improvements in the "System For Extracting Contaminants And Hydrocarbons From Cuttings Waste In Oil Well Drilling", as disclosed in U.S. Patent No. 4,606,283, and are likewise incorporated herein by reference.

Referring now to FIGURES 1 and 2 of the drawings, FIGURE 1 illustrates the oil recovery system of the present invention which is illustrated by the numeral 10. For purposes of discussion, the oil recovery system of the present invention is directed to a first principal stage which is undertaken in the oil extraction process stage designated by the numeral 12, the oil recovery stage itself designated by the numeral 14. A third stage as designated by numeral 16, relates to a means for preventing ignition of cuttings during the incineration process. So that a clear understanding can be had of the system, a discussion of the oil extraction stage 12 shall be initially described.

As is seen in the FIGURES, oil extraction unit 12 comprises a main hopper 17 for receiving a quantity of cuttings that have been received from downhole, the cuttings for the most part are ladened with hydrocarbons or the like. Hopper 17 would direct the cuttings through chute 18 into a plurality of upper most laterally disposed incineration chambers 20. As seen in FIGURE 2, in the preferred embodiment there would be included a pair of laterally disposed incineration chambers 20 at the upper most level for receiving the wet oil ladened cuttings from hopper 17.

It should be noted that rather than go into detail on the structural components of the incineration chambers 20, it is understood that each chamber 20 could be of the type as disclosed in U.S. Patent No. 4,606,283, incorporated herein by reference, including a laterally disposed auger 21 having an internal continuous auger blade 22 for moving the oil ladened cuttings from a first end 24 that has received the cuttings through the top portion 25 of chamber 20 to a second end 26 wherein the cuttings would be removed from the upper most chamber 20. Likewise, chamber 20 shall have the same type of heating elements that are disclosed in the aforesaid U.S. Patent, and will function to provide a continuous layer of heat directed inwardly towards the cuttings that are being moved through the internal incineration chambers 20.

Each of the auger blades 22 are driven by the separate motor 28, which provides selective, variable speed to the auger 22 depending on the speed at which one wishes the cuttings to travel throughout the length of incineration chamber 20.

Following the introduction of the cuttings into chamber 20, chamber 20 has been heated up to a temperature at least 500 degrees $F(260^{\circ} C)$ as the cuttings are moving through the length of the chamber in the direction of Arrow 30. During this movement of cuttings, any oil or gas or other hydrocarbons which may be ladened upon the oil cuttings would tend to vaporize, within chamber 20. The vaporized hydrocarbons would be removed via outlet line 32 into the oil recover section 14, as will be discussed further.

As the cuttings move to the end portion 26 of the upper most pair of incineration chambers 20, the cuttings would then be deposited into chute 34 which would deposit the cuttings into the second most section of chambers 36 which comprise preferably a pair of laterally disposed chambers, and housed therewithin is a continuous auger 22 (not illustrated) which is driven by a variable speed via motor 28 during use. Unlike the direction of the movement of the cuttings within chamber 20, the cuttings in chamber 36 move in the opposite direction as indicated by Arrow 38, due to the fact that they have been deposited at the end 37 and must be carried throughout the chamber 36 to the second end 39 for further treatment. It will be recalled that the cuttings deposited within chamber 36 have for the most from them removed most if not all of the hydrocarbons having been vaporized, and therefore move into chambers 36 substantially dry. However, like chamber 20, chamber 36 is likewise heated with the type of heating element as disclosed in U.S. Patent No. 4,606,283, and defines substantially an incineration chamber therewithin as the cuttings move in the direction of Arrow 38 to the second end 39 of the chamber 36. During this movement, the cuttings are heated to a temperature of approximately 1000 to 1200° F.(537.8°C to 648.9°C) wherein the cuttings are substantially dried and crushed to an ashen state when they reached the second end 39 of chamber 36. Upon moving to end 39, the cuttings are then deposited into chute 41 and fall into a pair lower most chambers 44. As seen in FIGURE 2, in end view, each pair of intermediate chambers 36 and lower chambers 44 are positioned in two columns, so that material falling from each chamber 20 to chamber 46 through chutes 34 and 41 respectively fall in a straight line and therefore there is no impedance in the movement of the cuttings from the upper to the intermediate to the lower chambers as the cuttings move from upper chambers 20 to the lower chambers 44. Therefore, the system may operate more efficiently and the presence of the two column chambers enabled quicker movement of the cuttings through the chambers and therefore quicker removal of the cuttings during the process.

Like chambers 20 and 36, chambers 44 has contained therewithin a continuous auger, similar to auger 22, operated by electric motor 28 so that the cuttings which fall into the end 44 of chambers 44 via chute 41 are moved in the direction of Arrow 53 to the furthest most end 51 of chambers 44. Since the cuttings have been dried and crushed to an ashen state, chambers 44, although equipped with the same type of heating elements as with chambers 20 and 36, would for the most part, in most cases, not be heated to any temperature but would be kept at substantially ambient temperature. By doing so, as the cuttings are moved from the first end 49 to the second end 51 of chambers 44, the cuttings are allowed to cool from their high temperature after being heated within chambers 36, and during the travel between end 49 to end 51 have cooled substantially to a point where they may be deposited out of chambers 44.

As illustrated in FIGURE 2, the cuttings would exit chambers 44 via a pair of chutes 52. Each chute 52, in this particular embodiment, would dump into a transport chamber 54 which would in effect be a laterally disposed chamber having a continuous auger 56 therethrough through which the dried cuttings could be moved from the first end 57 to the exit end 59. As illustrated in FIGURE 2, for uses on land rigs, cuttings would fall in the direction of Arrow 61 onto a conveyor system 60, having a continuous conveyor belt 62 for conveying the dried cuttings into a storage bin or the like. For purposes of offshore uses, in view of the fact that the cuttings are decontaminated, the cuttings would fall from end portion 59 directly into the surrounding waters.

As seen in FIGURE 1, auger units 20, 36 and 44 would be substantially supported by a vertically disposed support members 43 resting upon a skid unit 64. The incineration chambers of the present invention would be supplied energy from an electrical control system of the type disclosed in U.S. Patent No. 4,606,283, in order to obtain the required temperature within the incineration chambers.

Prior to a discussion of the means for preventing inadvertent ignition of hydrocarbon vapors within the incineration chamber due to the intense heat, it should be recalled that as disclosed in pending U.S. application 946,953, the vapors which are formed during the incineration are removed through an exhaust system 60, as seen in FIGURE 1, with exhaust lines 63 carrying any vapors from upper chambers 20 into the principal exhaust line 62, exhaust line 64 carrying any vapors from intermediate chambers 36 into principal exhaust line 62 and exhaust lines 66 carrying any vapors which may be emitted from lower chambers 44 into principal exhaust line 62 as seen principally in FIGURE 2. In the preferred embodiment, the movement of the gas and vapors from the chambers through principal exhaust line 62, would be as a result of fan 70 positioned within oil recovery zone 14 which would create a vacuum within line 62 to assure that any vapors formed within the incineration chambers are immediately pulled up from the chamber through the exhaust lines as discussed. This appreciation of the recovery of the vapors within the incineration chambers is vital as to the discussion of the ignition prevention means that will follow.

As was referred to earlier, incineration chambers 20 and 36 would incinerate the oil ladened cuttings moving therethrough at a temperature range between 500°F and 1200°F(260°C to 648.9°C). At that temperature, there is a distinct possibility that the hydrocarbon vapors formed during the incineration would tend to ignite and result in explosions within the incineration chambers which at the least may affect the operation of the chambers, and at the worst, make a disruption of the system through the possible rupture of the incineration chamber as a result of the ignition.

Therefore, the improved system has incorporated a means for preventing the inadvertent ignition of hydrocarbons within its incineration chambers 20, 36, or 44 through the introduction of an inert fluid or gas into each of the chambers during incineration. As seen in the FIGURES, this means would include an inert gas inlet line 100 which would introduce an inert fluid or gas, preferably nitrogen, through line 100 into the incineration chambers. For purposes of efficiency, there may be included a nitrogen producing system adjacent the present invention, which, as known in the art, would extract nitrogen from the ambient atmosphere, pressurize it, and feed it into the system through line 100. Following the movement of the pressurized nitrogen gas through line 100, the gas would flow into first entrance line 102 into the first end 26 of chamber 20 and into second line 104 into the second end 24 of chamber 20, with the nitrogen gas flowing in the direction of Arrow 31 from the first end 26, in the direction of Arrow 30 from the second end 24 of chamber 20. Therefore, nitrogen gas would flow into each ends of the chamber toward line 63 and would substantially fill the chamber with sufficient quantity of inert gas which would prevent the oxygen content of the chamber 20 to cause ignition. Therefore, nitrogen gas, together with the vapors from the incineration would be pulled into principal exhaust line 62 and into system 60, which is of the type as was disclosed in pending Application 946,953, and will be discussed further.

Further, as seen in the Figures, there is a second gas introduction line 106 which would introduce gas into the first end 37 of intermediate incineration chamber 36 and line 108 which would introduce gas into the second end 39 of incineration chamber 36, again the nitrogen gas flowing in the direction of Arrow 37 from end 39, and in the direction of Arrow of Arrow 38 from first end 37. Like incineration chamber 20, the nitrogen gas in incineration 36 would fill chamber 36 and likewise prevent ignition of the hydrocarbon vapors. The vapors would be sucked into exhaust system 60, together with the hydrocarbons vapors.

Also, lower incineration units 44 would have the introduction of nitrogen gas via first line 110 at first end 51 and line 112 at second end 49, again the gas moving in the direction of Arrows 50 and 53 respectively and up into the exhaust system 60, again preventing any inadvertent ignition of the vapors therewithin. For safety purposes, it should be noted that following the introduction of the vapors and the residue nitrogen gas into the exhaust system 60, there is further included a gas introduction line 114 which feeds directly into the principal exhaust line 62 so that in the event any vapors which may ignite within exhaust line 62 due to the possibility of intense heat therewithin, would likewise be saturated with sufficient nitrogen gas to prevent any inadvertent ignition prior to the introduction of the vapors into the oil recovery zone 14. Therefore, in the improvement of the system, it is assured that any possible ignitions which may have occured in the past in less sophisticated systems would be prevented from occurring and would assure proper incineration without the possibility of ignition within the system.

Any of the vapors which are emitted from the upper most chamber units 20, 36 and 44, are collected via exhaust collection pipe 62, and travel to the oil recovery zone 14. As discussed earlier, fan or the like 70 would draw the vapors from the chambers as the vapors are collected during the heating process.

Turning now to the oil recovery zone 14 of the present invention, it was discussed earlier that the hydrocarbons which have been carried into the system by the cuttings, would vaporize, and vapors would then be drawn into principal oil collection exhaust pipe 62. Exhaust pipe 62 would carry the vapors into a condensing means 70 which comprises an upper air condensing chamber 74 which would comprise a system of pipes 76 which would carry a coolant such as water or the like into the condensing section 74 in order to cool the section to a requisite temperature so that any vapors entering into section 74 would be condensed upon traveling through system 74. The coolant would then exit pipe 78 and would be rerouted through a coolant system to return at the necessary cool temperature through pipe 76, so that the temperature of the coolant would then cool condensation zone 74 would be maintained at the requisite temperature. For purposes of construction of condenser 70, it should be noted that condenser 70 could be of the type manufactured by Xchanger Corporation.

Returning to the condenser unit, following the condensation of the oil vapors within condenser section 74, the condensation would then move through lower section 77 into a main collection means 88 which comprises an overall enclosed tank portion with a lower condensing section 77 allowing fluid to flow thereinto through top portion 87. Collection means 88 would comprise a closed tank portion 90 comprising four walls 92, a bottom portion 94 and a top portion 96 to define an oil condensation collection zone therewithin. Tank portion 90 is divided into a first collection tank 98 and a second collection tank 200 collection tanks 90 and 200 separated by vertically disposed baffle 202 vertically disposed between the front and rear wall of tank 90 and to a height substantially 3/4 of the height of tank 90 whereby there is provided a fluid flow space 204 between the top 96 and the top end of baffle plate 202.

It its function, as oil and water condensate 91 falls into tank 90, the lighter hydrocarbons 204 will rise to the upper layer of the fluid within tank portion 98 and the water 205 contained within the condensate will settle to the lower portion 206 of the tank portion 98. As the level of the oil water volume rises, the oil volume 204 upon reaching the top end of baffle 202 will spill over into second collection unit 200 as illustrated by flow 208. Upon the flow reaching the certain level within tank portion 200, the oil 204 in tank 200 can then be siphoned or pumped out of tank 200 via spigot 210 to be collected into an oil tank.

For purposes of the water 205 collected in tank 206, there is provided a monitor means 212 which has a probe 214 directed into the interior of tank portion 98 so that when probe 214 is made to contact water 206 to that level as seen by interface 216, the probe will automatically open spigot 218 and the water 206 will be drained therefrom to be deposited as waste or for other uses.

Therefore, during this entire oil recovery process, in the initial step of the process the vaporized hydrocarbons in water are siphoned off into the oil collection or recovery zone 14 to be collected in the manner that was described, and the cuttings which are then routed through augers 36 and 44 for further burning, breaking, drying and cooling so that they may be deposited into the surrounding waters. Therefore, the entire process has assured that the contaminated cuttings from downhole have been reduced to a ashen state for safe recovery and disposal, and valuable oil which may have been contained in the cuttings is removed at an early stage and recovered for storage as the valuable commodity for the oil company, and the improvement in the system for assuring that through the introduction of inert gas into the various incineration chambers, that any inadvertent ignition of the hydrocarbon vapors is precluded, and the system remains safe during the incineration process.

Because many varying and different embodiments may be made within the scope of the inventive concept herein taught, and because many modifications may be made in the embodiments herein detailed in accordance with the descriptive requirement of the law, it is to be understood that the details herein are to be interpreted as illustrative and not in a limiting sense.

## Claims

1. An oil recovery system, comprising:

a) at least one chamber (20) for receiving oil well cuttings and heating the cuttings to a temperature so as to cause vaporization of hydrocarbons contained on the cuttings; and

b) exhaust means for receiving the vaporized hydrocarbons from the chamber and moving the hydrocarbons to a recovery zone; characterised by

c) means for introducing a fluid into the chamber of such a quantity and relative inertness as to hinder inadvertent ignition of the vapors during vaporization of the hydrocarbons.

2. The system in Claim 1, further including condensing means for condensing the recovered hydrocarbons in a collection zone.

3. The system according to claim 1 or 2 and further including means for allowing the hydrocarbons to separate out from other fluidized vapors for transporting into storage.

4. A method for hindering ignition of hydrocarbons that are removed from oil well cuttings through heating, the method comprising:

a) providing a vaporisation zone for receiving oil well cuttings containing hydrocarbons therein;

b) transferring the cuttings containing hydrocarbons into the vaporization zone;

c) vaporizing the hydrocarbons from the cuttings;

d) introducing an inert gas into the vaporization zone to preclude ignition of the vapors; and

e) routing the vaporized ignited hydrocarbons into a collection zone.

5. The method in claim 4, further comprising the steps of routing the ignited hydrocarbons into a first condensation zone.

6. The method according to claims 4 and 5 further comprising the step of condensing and separating the hydrocarbons from heavier water.

7. The method according to claim 4,5 or 6 further comprising the step of recovering the separated hydrocarbons and removing the water from the collection zone.

8. The system according to any one of claims 4 to 7, wherein the vaporized hydrocarbons are moved into the condensation zone via a suction fan.

9. The system according to any one of claims 4 to 8 wherein the condensation zone further comprises a plenum chamber having the plurality of fluid flow pipe there through for cooling the vaporized hydrocarbons as they flow therethrough.

10. The system according to any one of claims 4 to 9 wherein the hydrocarbons are separated from the water by allowing the hydrocarbons to flow over the upper section of a baffle to be collected in a second zone.

11. An oil recovery system, comprising: a) a first means for collecting and disposing of cuttings, said means comprising:

i) a first upper laterally disposed incineration chamber for moving oil ladened cuttings therethrough and vaporizing the oil from the cuttings;

ii) a second plurality of incineration chambers for receiving the cuttings from the first incineration chamber, further incinerating the cuttings to an ashen state and crushing the cuttings within said chamber; and

iii) a third laterally disposed chamber for receiving the cuttings from the second plurality of chambers, and moving the cuttings along the chamber allowing the cuttings to dry and be disposed therefrom, each of said chambers including a quantity of inert gas sufficient to prevent ignition within said chambers;

b) an oil recovery zone, further comprising:

i) means for condensing the oil that has been vaporized from the first incineration chamber;

ii) a collection zone for receiving the vaporized hydro-carbons in water thereinto; and

iii) means for allowing the oil condensed within the collection zone to separate from the water and being collected separate therefrom.

12. In a system where oil is recovered from oil well cuttings, the system including an incineration chamber for moving the oil ladened cuttings therethrough and vaporizing the oil from the cuttings through heating of the cuttings, the improvement comprising the step of introducing an relatively inert gas into the incineration chamber of a quantity for preventing ignition of the vaporized cuttings in the chamber, so that the vaporized oil may be removed from the chamber, condensed and recovered, and the cuttings may be transported for storage or waste disposal.

FIG.1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 139 462 (SAMPLE) <br> * Abstract; figures; column 3, line 59 - column 4, line 45; column 5, lines 10-37 * | 1-8,10, 12 | E 21 B 21/06 |
| Y | --- | 11,9 | |
| X | US-A-4 208 285 (SAMPLE) <br> * Abstract; figures * | 1-8,10, 12 | |
| Y | --- <br> EP-A-0 184 411 (ATLANTIC RICHFIELD CO.) <br> * Abstract; figures; page 5, line 17 - page 6, line 17 * | 9,11 | |
| A | --- <br> EP-A-0 200 418 (ATLANTIC RICHFILED CO.) <br> * Abstract; figures; column 4, line 43 - column 5, line 48 * | 1-12 | |
| A,D | --- <br> US-A-4 606 283 (DESORMEAUX) <br> * Figures; abstract * <br> ----- | 1-12 | TECHNICAL FIELDS SEARCHED (Int. Cl.4) <br><br> E 21 B |

The present search report has been drawn up for all claims

| Place of search | Date of completion of the search | Examiner |
|---|---|---|
| THE HAGUE | 09-06-1989 | WEIAND T. |

EPO FORM 1503 03.82 (P0401)